**Europäisches Patentamt**

**European Patent Office**

**Office européen des brevets**

(11) Veröffentlichungsnummer: **0 481 125 A2**

# EUROPÄISCHE PATENTANMELDUNG

(21) Anmeldenummer: **90124187.7**

(51) Int. Cl.5: **B23K 20/12**

(22) Anmeldetag: **14.12.90**

Die Anmeldung wird, wie ursprünglich eingereicht, unvollständig veröffentlicht (Art. 93 (2) EPÜ). Die Stelle der Zeichnungen, die offensichtlich eine Auslassung enthält, ist als Lücke an der entsprechenden Stelle ersichtlich.

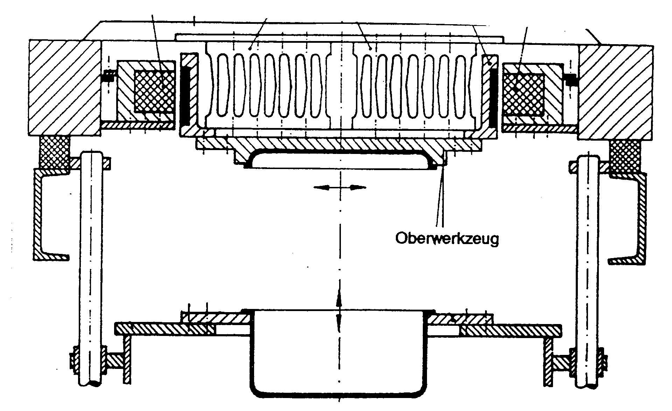

Ein Antrag gemäss Regel 88 EPÜ auf Hinzufügung der Figuren 2, 3, 4 liegt vor. Über diesen Antrag wird im Laufe des Verfahrens von der Prüfungsabteilung eine Entscheidung getroffen werden (Richtlinien für die Prüfung im EPA, A-V, 2.2).

(30) Priorität: **18.01.90 DE 4001367**

(43) Veröffentlichungstag der Anmeldung:
**22.04.92 Patentblatt 92/17**

(84) Benannte Vertragsstaaten:
**BE DE ES FR GB IT LU NL**

(71) Anmelder: **BRANSON ULTRASCHALL Niederlassung der EMERSON TECHNOLOGIES GMBH & CO.**
**Waldstrasse 53-55**
**W-6057 Dietzenbach(DE)**

(72) Erfinder: **Lovett, Don**
**c/o Branson Ultrasonics Corp., Eagle Road 41**
**Danbury CT 06813-1961(US)**
Erfinder: **Altena, Richard, c/o Branson Ultraschall**
**Niederlassung der Emerson Technologies GmbH & Co.**
**Waldstrasse 53-55, W-6057 Dietzenbach(DE)**

(74) Vertreter: **Hauck, Hans, Dipl.-Ing. et al**
**Mozartstrasse 23**
**W-8000 München 2(DE)**

(54) **Vorrichtung zum Einstellen eines Maschinenparameters beim Reibungsschweissen.**

(57) Bei einer Anordnung zum Reibungsschweißen, bei der der angetriebene Schwinger ein Werkzeug zur Aufnahme eines Fügeteils trägt, soll der Antrieb so erregt werden, daß der Schwinger mit dem Werkzeug mit der mechanischen Resonanzfrequenz schwingt. Bei unterschiedlichen Werkzeugen ist auch die Resonanzfrequenz verschieden. Die Abstimmung erfolgt erfindungsgemäß durch einen Mikroprozessor, der die Arbeitsfrequenz des Wechselstromsignals zum Erregen des Antriebes so lange verändert, bis die Stromstärke des Wechselstromsignals bei einer vorgegebenen Schwingungsamplitude minimal ist.

Oberwerkzeug

Die Erfindung betrifft eine Vorrichtung zum Einstellen eines Maschinenparameters beim Reibungsschweißen gemäß dem Oberbegriff des Patentanspruchs 1.

Beim Reibungsschweißen werden die Fügeteile in einer oszillierenden, translatorischen Relativbewegung so lange gegeneinander gerieben, bis der Werkstoff in der Berührungszone aufschmilzt und ein Ineinanderfließen im Berührungsbereich stattfinden kann. Danach wird der Vibrationsvorgang beendet, so daß beim Abkühlen eine stoffschlüssige Verbindung entsteht.

Zum Erzeugen der Vibrationsbewegung dient ein Schwingkopf, an dessen Schwinger eine Werkzeugaufnahme befestigt ist. Der elektromagnetische Schwingkopfantrieb wird mit einem Wechselstromsignal erregt, das in einem Inverter erzeugt wird und dessen Frequenz in etwa gleich der Resonanzfrequenz ist, die durch das mechanische Resonanzsystem der gestellseitigen und schwingerseitigen Massen, sowie der Masse der Federn zwischen dem Schwinger und dem Gestell und der Federkonstante bestimmt ist. Ein Hubtisch bringt die zu verschweißenden Fügeteile in Kontakt.

Wird die Vibrationsschweißanlage auf andere Fügeteile umgerüstet, so muß auch die schwingerseitige Werkstückaufnahme zum Halten des oberen Fügeteils ausgewechselt werden. Damit ändert sich die schwingerseitige Masse und auch die mechanische Resonanzfrequenz des Systems. Es muß also die Frequenz des vom Generator erzeugten Wechselstromsignals der neuen Resonanzfrequenz angeglichen werden. Beim derzeitigen Stand dieser Technologie ist ein manueller Abgleich am Generator erforderlich, um die Frequenz des Wechselstromsignals auf die geänderten akustischen Verhältnisse abzustimmen.

Die der Erfindung zugrunde liegende Aufgabe besteht darin, bei einem Werkzeugwechsel den Frequenzabgleich automatisch herbeizuführen.

Die genannte Aufgabe ist mit den Merkmalen des Patentanspruchs 1 gelöst.

Erfindungsgemäß ist der manuelle Abgleichvorgang hinfällig und lassen sich die für die unterschiedlichsten Teileaufnahmen erforderlichen Frequenzen automatisch abgleichen. Das erfindungsgemäße breitbandige Massespektrum für die unterschiedlichsten Teileaufnahmen führt so zu einer Automatisierung des Werkzeugwechsels, sowie zu reduzierten Rüstzeiten bei manuellem Werkzeugwechsel und einer erhöhten Produktionssicherheit, wobei umgebungsbedingte Temperatureinflüsse keinen Einfluß auf die korrekte Arbeitsweise des Antriebssystems nehmen.

Ein Ausführungsbeispiel der Erfindung ist nachstehend anhand der Zeichnung erläutert. Es zeigt:

Figur 1 einen Schnitt durch eine Vibrationsschweißanlage bekannter Bauart,

Figur 2 ein Blockschaltbild der automatischen Abstimmung,

Figur 3 eine Darstellung der frequenzbedingten Stromstärke des Wechselstromsignals und

Figur 4 eine Darstellung der freuqenzbedingten Regelspannung des Mikroprozessors.

In Figur 1 ist eine bekannte Schweißanlage dargestellt, deren Schwingkopf aus einer gestellseitigen Brücke 1 und gestellseitigen Elektromagnetspulen 2, aus einem Schwinger 3, Federn 4 zwischen der Brücke 1 und dem Schwinger 3 und aus einem am Schwinger befestigten Oberwerkzeug 5 besteht, in dem ein oberes Fügeteil 6 gehalten ist. Das untere Fügeteil 8 ist in einem Unterwerkzeug 9 gehalten und wird von einem Hubtisch 10 in Kontakt mit dem oberen Fügeteil 6 gebracht.

Der elektromagnetische Antrieb treibt den Schwinger 3 gegen die Zugkraft der Federn 4 an. Der Schwinger 3 mit den den Spulen 2 gegenüberliegenden Vibrationsplatten und das Oberwerkzeug 5 bilden die sogenannte innere Masse $M_1$ und die Brücke 1 mit den Spulen 2 bilden die äußere Masse $M_2$. Die Masse der Federn 4 geht je zur Hälfte in die äußere und innere Masse ein. Die Masse $M_1$, $M_2$ und die Federkonstante K der Federn 4 bilden ein mechanisches Resonanzsystem. Die Massen werden vom Antrieb in eine lineare Schwingung in Vibrationsrichtung 12 versetzt, wobei die Masse $M_1$ die erforderliche Amplitude für die Verschweißung erzeugt. Bei einer Vibrationsfreuenz von 100 Hz beträgt die Amplitude zwischen 1-2 mm.

Gemäß Figur 2 ist ein Frequenzwandler 15 an eine Netzspannungsversorgung 16 angeschlossen und erzeugt ein Wechselstromsignal i zum Erregen der Elektromagnetspulen 2 des Schwingkopfes. Die Schwingungsamplitude A des Schwingers 3 wird gemessen und zum Generator 15 zurückgeführt, der die Spannung des Wechselstromsignals i so einstellt, daß die gewünschte Schwingungsamplitude erzielt wird.

Zum automatischen Abgleich der Frequenz des Wechselstromsignals i ist an die Ausgangsleitung des Generators 15 ein Wandler 17 angeschlossen, in der die Stromstärke des Wechselstromsignals in eine entsprechende Spannung u umgesetzt wird, die an den Eingang eines Mikroprozessors 18 geführt ist. Eine Ausgangsspannung U des Mikroprozessors 18 ist an den Steuereingang des Generators 15 angeschlossen, der die Ausgangsfrequenz des Wechselstromsignals i bestimmt. Der Generator 15 selbst ist ein Frequenzwandler, in dem entsprechend dem Signal U die Netzfrequenz in die Arbeitsfrequenz umgewandelt wird, wobei die vom Inverter erzeugte Frequenz der Hälfte der mechanischen Resonanzfrequenz entspricht. Die Doppelung der Frequenz ergibt sich automatisch aufgrund des Wechselstrombetriebes.

Wie aus Figur 3 hervorgeht, wird die Arbeitsfrequenz des Wechselstromsignals i so eingestellt, daß die Arbeitsfrequenz gleich der Resonanzfrequenz des Schingkopfes ist. Ist der Frequenzabgleich erreicht, so zeigt sich dies deutlich darin, daß der Verlauf des Wechselstromsignals i auf einen Minimalwert $i_{min}$ absinkt. Wird nun beim Umrüsten zum Schweißen anderer Fügeteile das Oberwerkzeug 5 ausgewechselt, so ändert sich die Masse des Schwingers und damit verschiebt sich beispielsweise die Resonanzfrequenz $f_0$ des Systems auf $f'_0$. Es muß also die Arbeitsfreuenz entsprechend geändert werden, damit auch für die veränderte Resonanzfrequenz ein Minimum für die Stromstärke erreicht wird.

Dieser automatische Abgleich erfolgt über den Mikroprozessor 18, der entsprechend dem stromproportionalen Eingangssignal u eine Ausgangsspannung U bereitstellt, die so lange verändert wird, bis die Arbeitsfrequenz des Wechselstromsignals i gleich der geänderten Resonanzfrequenz ist. Die Rückführung regelt also die Frequenz des Generators 15 bis der Ausgangsstrom i ein Minimum aufweist.

In Figur 4 ist die Abhängigkeit zwischen der Arbeitsfrequenz f und der Steuerspannung U des Mikroprozessors dargestellt. Hiernach wird bei einer Spannungserhöhung die Arbeitsfrequenz erhöht. Nach dem Einspannen eines Oberwerkzeuges wird vom Prozessor 18 der gesamte Steuerspannungsbereich, beispielsweise von Null bis 15 V durchfahren und dabei die in Figur 3 dargestellte Stromkurve entsprechend der Resonanzfrequenz $f_0$ ermittelt. Diese Kurve wird gespeichert und dient als Referenz für veränderte Frequenzverhältnisse, die durch einen Werkzeugwechsel bedingt sind. Bei einem Werkzeugwechsel wird dann die sich einstellende Stromkurve erneut ermittelt und mit der gespeicherten Kurve verglichen. Weicht die neue Stromkurve bzw. der neue Stromwert um eine vorgegebene Toleranz von den gespeicherten Daten ab, so wird die Steuerspannung nachgeregelt, bis bei der geänderten Frequenz nun wieder der minimale Stromwert oder ein annähernder Wert erreicht ist.

## Patentansprüche

1. Vorrichtung zum Einstellen eines Maschinenparameters beim Reibungsschweißen, mit einem an einer gestellseitigen Brücke über Federn getragenen Schwinger, der von einem elektromagnetischen Antrieb in eine oszillierende translatorische Bewegung versetzt wird und an dem ein Werkzeug zur Aufnahme eines der Fügeteile befestigt ist, und mit einem Generator zum Erzeugen eines Wechselstromsignals, dessen Frequenz im wesentlichen gleich der mechanischen Resonanzfrequenz ist, die durch die Massen des Schwingkopfes und der Federn sowie der Federkonstante bestimmt ist, dadurch gekennzeichnet, daß eine aus einem Wandler (17) und einem Mikroprozessor (18) bestehende Rückführung für das dem Schwingerantrieb (2) zugeführte Wechselstromsignal vorgesehen ist, und von dem Mikroprozessor die Arbeitsfrequenz des Wechselstromsignals so lange verändert wird, bis die Stromstärke des Wechselstromsignals bei einer vorgegebenen Schwingungsamplitude minimal ist.

2. Verfahren mit einer Vorrichtung nach Anspruch 1, dadurch gekennzeichnet, daß durch Verändern der Steuerspannung des Generators (15) die frequenzabhängige Stromkurve für ein bestimmtes Werkzeug ermittelt und als Referenz gespeichert wird, daß bei Werkzeugwechsel eine entsprechende Stromkurve ermittelt wird und daß die Steuerspannung verändert wird, bis der minimale Referenzwert des Stromes mindestens annähernd erreicht ist.

3. Verfahren nach Anspruch 2, dadurch gekennzeichnet, daß das Aufzeichnen der Stromkurven während eines Schweißvorgangs erfolgt.

Oberwerkzeug